# EUROPÄISCHE PATENTANMELDUNG

(11) **EP 1 898 107 A1**
(43) Veröffentlichungstag der Anmeldung: **12.03.2008**
(21) Anmeldenummer: 06018644.2
(22) Anmeldetag: 06.09.2006
(51) Int. Cl.: F16B 37/12, F16B 11/00

(54) **Verfahren zum Montieren einer Schraube und eines gewindepanzernden Elementes sowie Anordnung zum Durchführen des Verfahrens**

(71) Anmelder: Bofag Fastener AG, 8021 Zürich (CH)
(72) Erfinder: Die Erfindernennung liegt noch nicht vor
(74) Vertreter: Hauck Patent- und Rechtsanwälte

(57) **Zusammenfassung**

Beschrieben wird ein Verfahren zum Montieren einer Schraube und eines gewindepanzernden Elementes (18,26) in einem Aufnahmegewinde eines Bauteils (4), bei dem das gewindepanzernde Element (18,26) zunächst durch Kraftschluss oder/und Stoffschluss auf der Schraube (10) fixiert wird und anschließend die Schraube (10) mit dem darauf fixierten gewindepanzernden Element (18,26) in einem einzigen Arbeitsgang in das Aufnahmegewinde (8) des Bauteils (4) eingedreht wird. Beschrieben wird ferner eine Anordnung aus einer Schraube (10) und einem darauf fixierten gewindepanzernden Element (18,26) zum Durchführen des Verfahrens.

## Beschreibung

Die vorliegende Erfindung betrifft ein Verfahren zum Montieren einer Schraube und eines gewindepanzernden Elementes in einem Aufnahmegewinde eines Bauteils sowie eine Anordnung zum Durchführen des Verfahrens.

Herkömmliche Gewindeeinsätze in Form eines wendelförmig gewickelten Drahtes oder einer Gewindebuchse dienen zum Verstärken des Aufnahmegewindes von Bauteilen aus Materialien relativ geringer Festigkeit. Zu diesem Zweck wird das gewindepanzernde Element in dem Aufnahmegewinde montiert, worauf dann die Schraube in das gewindepanzernde Element eingedreht werden kann. Die Gesamtmontage erfordert somit zwei Arbeitsgänge, zum einen das Einbringen des gewindepanzernden Elementes in das Aufnahmegewinde und zum anderen das Einbringen der Schraube in das montierte gewindepanzemde Element, was die Montage entsprechend aufwendig macht.

Zum Einbringen des gewindepanzernden Elementes in das Aufnahmegewinde sind zwei Montagearten üblich. Bei der einen Montageart ist der wendelförmige Draht mit einer Mitnahme-Kerbe versehen, über die ein Spezialwerkzeug den wendelförmigen Draht mitschleppt und in das Aufnahmegewinde eindreht, vgl. zum Beispiel US 4,563,119, US 4,645,398, US 4,553,303, etc. Bei der anderen Montageart ist der wendelförmige Draht an einem Ende mit einem diagonal verlaufenden Mitnahme-Zapfen versehen, über den wiederum ein Spezialwerkzeug den wendelförmigen Draht mitschleppt und hierdurch in das Auf nahmegewinde eindreht, vgl. zum Beispiel US 2,152,681, US 2,363,663, etc. Die Mitnahme-Kerbe resultiert in einer Querschnittsänderung des Drahtes, was den Wickelprozess schwieriger macht. Der Mitnahme-Zapfen hat den Nachteil, dass er nach der Montage gebrochen und entfernt werden muss. In jedem Fall ist ein aufwendiges und kostspieliges Spezialwerkzeug zum Einbringen des wendelförmigen Drahtes in das Aufnahmegewinde erforderlich.

Aus US-A-2 150 876 und US-A-2 745 457 ist ein gewindepanzerndes Element in Form eines wendelförmigen Drahtes bekannt, der an einem Ende mit einem diametral verlaufenden Mitnahme-Zapfen versehen ist. Die zugehörige Schraube ist an ihrem vom Schraubenkopf abgewandten Ende mit einer diametral verlaufenden Nut versehen, in die der Mitnahme-Zapfen des wendelförmigen Drahtes einschnappt, wenn der Draht auf der Schraube montiert wird. Die Schraube und der darauf montierte Draht können daher gemeinsam in das Aufnahmegewinde des Bauteils eingebracht werden. Hierdurch wird zwar der Montagevorgang vereinfacht; die Herstellung der Nut in der Schraube und des Zapfens am wendelförmigen Draht erfordern jedoch einen entsprechenden Aufwand.

Der vorliegenden Erfindung liegt die Aufgabe zugrunde, ein Verfahren zum Montieren einer Schraube und eines gewindepanzernden Elementes in einem Aufnahmegewinde eines Bauteils anzugeben, welches möglichst einfach ist und dennoch nur einen minimalen Aufwand zum Herstellen der Schraube und des gewindepanzernden Elementes erfordert. Ferner soll eine zum Durchführen des Verfahrens geeignete Anordnung geschaffen werden.

Das erfindungsgemäße Verfahren ist in Anspruch 1 definiert. Eine Anordnung zum Durchführen des Verfahrens geht aus Anspruch 12 hervor.

Bei dem erfindungsgemäßen Verfahren wird das gewindepanzernde Element durch Kraftschluss oder/und Stoffschluss zunächst auf der Schraube fixiert und anschließend die Schraube mit dem darauf fixierten gewindepanzernden Element in einem einzigen Arbeitsgang in das Aufnahmegewinde des Bauteils eingedreht.

Die "Endmontage" des gewindepanzernden Elementes und der Schraube wird somit auf einen einzigen Arbeitsgang reduziert, welcher mittels herkömmlicher Schraubwerkzeuge durchgeführt werden kann. Da das gewindepanzernde Element auf der Schraube durch Kraftschluss oder/und Stoffschluss fixiert wird, braucht die Schraube nicht mit einer "Mitnahme-Nut" wie im eingangs diskutierten Stand der Technik versehen werden. Es kann daher eine herkömmliche Schraube verwendet werden. Außerdem ist es nicht erforderlich, dass das gewindepanzernde Element mit einem Mitnahme-Zapfen versehen wird, der anschließend abgebrochen werden müsste. Das erfindungsgemäße Verfahren erlaubt somit einen deutlich verringerten Herstellungsaufwand im Vergleich zu dem eingangs diskutierten Stand der Technik.

Die "Vormontage", d.h. das Fixieren des gewindepanzernden Elementes auf der Schraube, kann beispielsweise beim Schraubenhersteller erfolgen, worauf dann die Schraube mit dem darauf fixierten gewindepanzernden Element als Einheit gehandhabt und an den Kunden (z. B. einen Fahrzeughersteller) geliefert werden kann. Die Vormontage beim Schraubenhersteller erfordert keinen großen Aufwand. Die Arbeitsersparnis beim Kunden ist dagegen beträchtlich.

Gemäß einer Möglichkeit ist das gewindepanzernde Element ein wendelförmiger Draht, der aus den genannten Gründen weder einen Mitnahme-Zapfen noch eine Mitnahme-Kerbe erfordert.

Gemäß einer anderen Möglichkeit besteht das gewindepanzernde Element aus einer Gewindebuchse mit einem Innengewinde und einem Außengewinde. Die Gewindebuchse wird auf der Schraube vorzugsweise durch Kraftschluss fixiert, kann jedoch auch durch Stoffschluss auf der Schraube fixiert werden.

Weitere vorteilhafte Ausgestaltungen der Erfindung sind in den abhängigen Ansprüchen definiert.

Anhand der Zeichnungen werden Ausführungsbeispiele der Erfindung näher erläutert. Es zeigt:
- Figuren 1 bis 4: eine perspektivische Ansicht einer Schraube mit einem darauf fixierten gewindepanzernden Element in unterschiedlichen Phasen eines Montagevorganges;
- Figuren 5 und 6: perspektivische Ansichten einer Schraube mit einem als wendelförmiger Draht ausgebildeten gewindepanzernden Element;
- Figur 7: eine perspektivische Ansicht einer Schraube mit einem als Gewindebuchse ausgebildeten gewindepanzernden Element;
- Figur 8: eine teilweise geschnittene Seitenansicht der Gewindebuchse in Figur 4 in vergrößertem Maßstab;
- Figur 9: eine Schraube mit einem herkömmlichen gewindepanzernden Element, das in einem Axialschnitt nur auf der linken Seite der Schraube dargestellt ist,
- Figur 10: eine der Figur 9 entsprechende Darstellung mit einem erfindungsgemäß ausgebildeten gewindepanzernden Element.

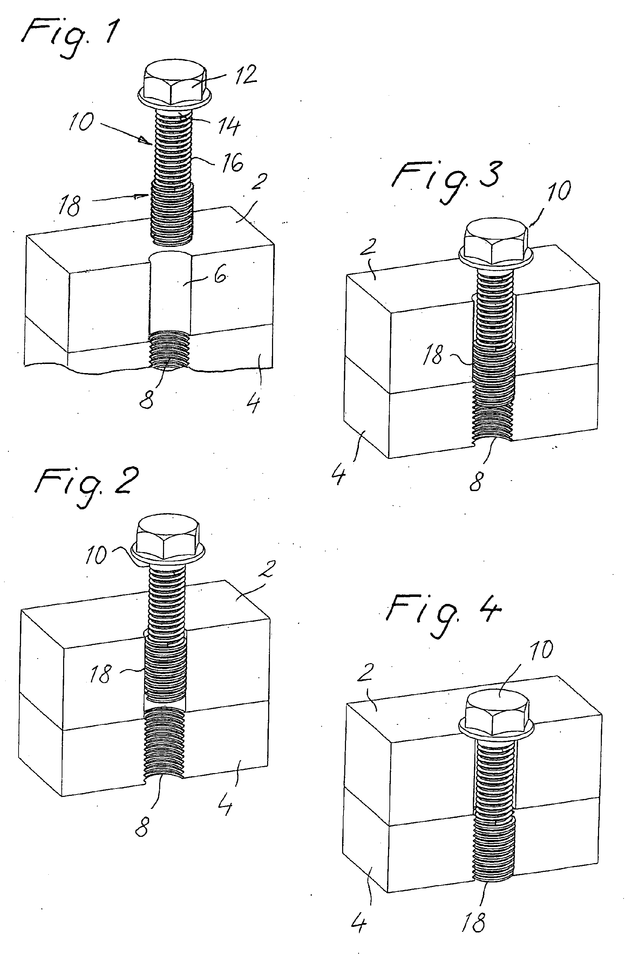

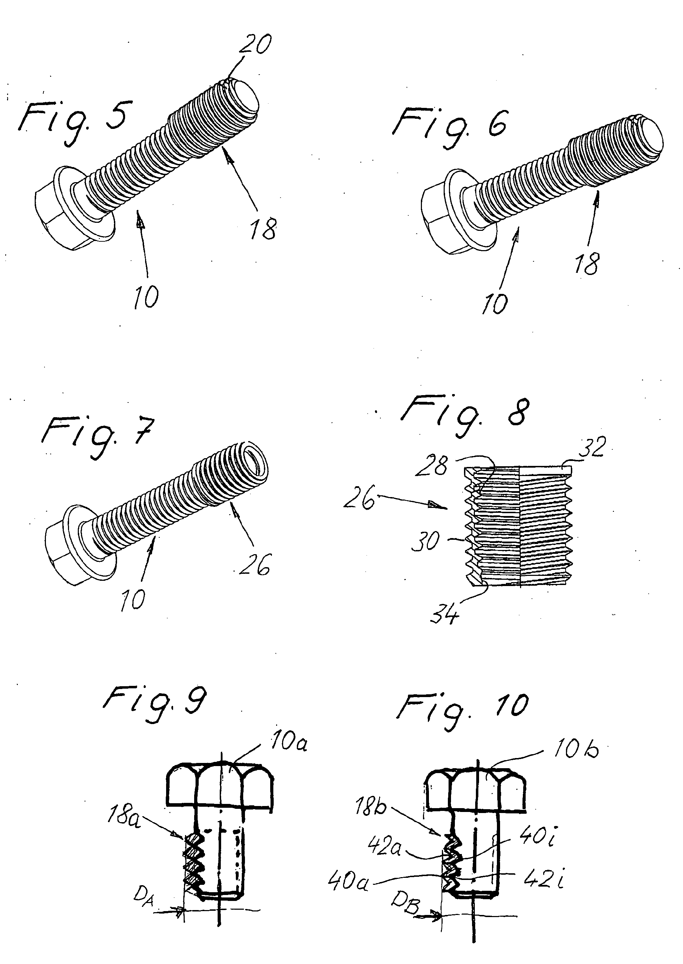

In den Figuren 1 bis 4 sind zwei miteinander zu verbindende Bauteile 2 und 4 angedeutet, von denen das Bauteil 2 mit einer glattwandigen Durchgangsbohrung 6 und das Bauteil 4 mit einem Aufnahmegewinde 8 versehen sind. Zum Verbinden der beiden Bauteile 2, 4 ist eine Schraube 10 vorgesehen. Die Schraube 10 besteht aus einem Kopf 12 und einem Schraubenschaft 14 mit einem Gewinde 16.

Zum Verstärken des Aufnahmegewindes 8 ist ein gewindepanzerndes Element 18 in Form eines wendelförmig gewickelten Federdrahtes vorgesehen, dessen Außenform an das Aufnahmegewinde 8 und dessen Innenform an das Gewinde 16 der Schraube 10 angepasst ist.

Wie in den Figuren 5 und 6 dargestellt ist, besteht der wendelförmige Draht 18 aus einer einfachen Wendel, die weder einen Mitnahme-Zapfen noch eine Mitnahme-Kerbe aufweist. Die Wendel ist aus einem Werkstoff hergestellt, die der Wendel elastisch federnde Eigenschaften verleiht. Dieser Werkstoff kann verschieden sein von dem Werkstoff der Schraube und/oder des Aufnahmegewindes.

Bei dem zu beschreibenden Montageverfahren wird zunächst das gewindepanzernde Element 18 auf das Gewinde 16 der Schraube 10 aufgebracht. Wie noch genauer erläutert wird, wird das gewindepanzernde Element 18 hierbei auf der Schraube 10 fixiert, so dass das gewindepanzernde Element auf der Schraube 10 unverlierbar gehalten wird.

Anschließend wird die Schraube 10 mit dem darauf fixierten gewindepanzernden Element 18 mittels eines herkömmlichen Schraubwerkzeugs (nicht gezeigt) durch die Durchgangsbohrung 6 des Bauteils 2 hindurch in das Aufnahmegewinde 8 des Bauteils 4 eingedreht. Hierbei können durch Anziehen der Schraube 10 die für eine hochfeste Schraubverbindung erforderlichen Vorspannkräfte erzeugt werden. Irgendwelche Spezialwerkzeuge und dadurch bedingte aufwendige Montagevorgänge sind nicht erforderlich.

Bei den Ausführungsformen der Figur 5 und 6 ist das gewindepanzernde Element 18 auf der Schraube 10 durch Kraftschluss und/oder Stoffschluss festgelegt. Der Kraftschluss wird vorzugsweise dadurch erreicht, dass das gewindepanzernde Element 18 an seinem einen Ende einen Endabschnitt 20 mit ein bis zwei Windungen hat, deren Innendurchmesser kleiner als der Gewindedurchmesser der Schraube 10 ist. Es entsteht somit eine Art Schlingfedereffekt, durch den das gewindepanzernde Element 18 auf der Schraube 10 festgelegt und während der Montage von der Schraube in das Aufnahmegewinde 8 mit eingedreht wird.

Der durchmesserverringerte Endabschnitt 20 der drahtförmigen Wendel 18 erstreckt sich vorzugsweise über 360° bis 720°, wenngleich er auch kleiner oder größer gewählt werden kann. Die Durchmesserverringerung des Endabschnittes 20 ist groß genug, um mit dem Gewinde der Schraube 10 einen Kraftschluss zu erzeugen, der größer ist als das zum Einschrauben des gewindepanzernden Elementes in das Aufnahmegewinde erforderliche Drehmoment. Außerhalb des Endabschnittes 20 hat der wendelförmige Draht 18 im nicht montierten Zustand einen Außendurchmesser, der etwas größer ist als der Innendurchmesser des Aufnahmegewindes 8, um einen Festsitz des gewindepanzemden Elementes nach dem Einbau sicherzustellen.

Ein Stoffschluss zwischen dem gewindepanzernden Element 18 und der Schraube 10 kann beispielsweise durch Aufbringen eines adhäsiven Bindemittels, insbesondere Wachs oder Klebstoff zwischen dem gewindepanzernden Element und der Schraube erzielt werden, was vorzugsweise durch Tauchen in das Bindemittel (Wachs, Klebstoff, etc.) erfolgt. Eine entsprechende stoffschlüssige Verbindung zwischen gewindepanzerndem Element und Schraube soll durch die Figur 6 angedeutet sein. Eine andere Möglichkeit einer stoff schlüssigen Verbindung ist eine Schweiß- oder Lötverbindung zwischen dem gewindepanzernden Element 18 und der Schraube 10, wobei diese Verbindung beispielsweise im Bereich des Bezugszeichens 20 in Figur 5 vorgesehen werden kann.

Bei der Montage der Schraube mit dem darauf fixierten gewindepanzernden Element sind zwei Fälle zu unterscheiden:

In dem einen Fall wird das gewindepanzernde Element von der Schraube nicht nur während des Eindrehens der Anordnung in das Aufnahmegewinde 8, sondern während des gesamten Anziehvorganges mitgedreht. Das Aufbringen der Vorspannkraft für die Schraubverbindung erfolgt dann mit Gewindereibung zwischen dem Außengewinde des gewindepanzernden Elementes und dem Aufnahmegewinde 8 im Bauteil 4. Diese Art der Montage erfolgt beispielsweise bei Ausführungsbeispielen, bei denen das gewindepanzernde Element 18 auf der Schraube 10 durch Schweißen oder Löten fixiert wird.

In dem anderen Fall löst sich die Fixierung zwischen dem gewindepanzernden Element 18 und der Schraube im Verlaufe des Anziehvorgangs aufgrund der steigenden Beanspruchung der Verbindung. Beispielsweise "bricht" die kraft- oder stoffschlüssige Verbindung zwischen dem gewindepanzernden Element 18 und der Schraube 10 bei z. B. einem Viertel des Nennanzugmomentes der Schraubenverbindung, so dass dann der restliche Anziehvorgang mit Gewindereibung zwischen dem gewindepanzernden Element 18 und der Schraube 10 und nicht zwischen dem Aufnahmegewinde und dem gewindepanzernden Element erfolgt. Da somit der "Hebelarm" der Gewindereibung in diesem Fall kleiner ist als in dem erstgenannten Fall, wird eine gleichmäßige und vergleichsweise geringe Gewindereibung, also eine optimale Gewindereibung erzielt.

Wenn die kraft- oder stoffschlüssige Verbindung zwischen dem gewindepanzernden Element 18 und der Schraube 10 erst bei einer Demontage der Schraube 10 bricht, so bietet dies dann immerhin die Möglichkeit, bei der erneuten Montage eine beliebige andere Schraube zu montieren.

Bei dem Ausführungsbeispiel der Figuren 7 und 8 besteht das gewindepanzernde Element aus einer Gewindebuchse 26. Die Gewindebuchse 26 ist mit einem Innengewinde 28 und einem Außengewinde 30 versehen, die um eine halbe Gewindesteigung gegeneinander versetzt sind, so dass die Gewindebuchse eine entsprechend geringe Wandstärke hat. Ein derartiger Gewindeversatz zwischen Innengewinde und Außengewinde ist jedoch nicht unbedingt erforderlich. Es kann jedoch auch eine dünnwandige Gewindebuchse einer anderen geometrischen Form verwendet werden.

An seinem einen axialen Ende hat die Gewindebuchse 26 einen umlaufenden Bund 32. Am anderen axialen Ende der Gewindebuchse 26 hat das Innengewinde 28 mindestens eine nicht vollständig ausgebildete Windung 34. Wenn daher die Gewindebuchse 26 auf die Schraube 10 aufgebracht wird, wird die Gewindebuchse 26 durch die nicht vollständig ausgebildete Windung(en) 34 des Innengewindes 28 auf der Schraube 10 fixiert. Die Montage kann dann in der gleichen Weise erfolgen, wie dies anhand der Figuren 1 bis 4 beschrieben wurde.

Ist die axiale Länge des Schraubenschaftes 14 der Schraube 10 größer als die gemeinsame Dicke der Bauteile 2 und 4, so läuft bei der Montage der Bund 32 der Gewindebuchse 26 auf das Aufnahmegewinde 8 des Bauteils 4 auf. Anschließend durchläuft das Gewinde 16 der Schraube 10 die nicht vollständig ausgeformte Windung(en) 34 der Gewindebuchse, bis der Schraubenkopf 12 am Bauteil 2 anliegt.

Statt durch Kraftschluss oder zusätzlich zum Kraftschluss kann die Gewindebuchse 26 auf der Schraube 1 durch Stoffschluss, z. B. durch Tauchen in ein adhäsives Bindemittel wie z.B. Wachs, Klebstoff oder durch Schweißen oder Löten, auf der Schraube 10 fixiert werden.

Die Gewindebuchse 26 kann im Übrigen mit einer Rückdrehsicherung (nicht gezeigt) versehen werden, damit die Gewindebuchse bei einer Demontage der Schraube 10 im Aufnahmegewinde 8 verbleibt. Die Rückdrehsicherung kann durch Formschluss erfolgen, beispielsweise durch eine Rändelkontur am Bund 32 oder eine Widerhakenkontur (Hinterschnitte in Umfangsrichtung) am Außengewinde 30. Die Rückdrehsicherung kann aber auch durch Kraftschluss und/oder Stoffschluss, z. B. eine Klebstoffbeschichtung am Außengewinde 30 der Gewindebuchse 32, erfolgen.

Eine entsprechende Rückdrehsicherung (nicht gezeigt) kann auch an dem wendelförmigen Draht 18 vorgesehen werden, wobei die Rückdrehsicherung ebenfalls durch Formschluss und/oder Kraftschluss und/oder Stoffschluss erfolgen kann. Zur Erzielung eines Formschlusses wird zweckmäßigerweise der Außenumfang des wendelförmigen Drahtes mit einer Rändelkontur oder einer Widerhakenkontur (Hinterschnitte) versehen.

Hat der Werkstoff des gewindepanzernden Elementes eine wesentlich größere Härte als derjenige des Aufnahmegewindes, so kann das gewindepanzernde Element als gewindefurchendes Element ausgebildet werden. In diesem Fall ist das Bauteil mit einer glatten Aufnahmebohrung versehen, in die dann das gewindepanzemde Element ein Gewinde einschneidet bzw. eingräbt, wenn es zusammen mit der Schraube in die Aufnahmebohrung eingedreht wird.

Bevor die Schraube 10 mit dem darauf fixierten gewindepanzernden Element in das Aufnahmegewinde 8 des Bauteils 4 eingedreht wird, können die Schraube 10 und das gewindepanzernde Element 18 bzw. 26 mit dem zweiten Bauteil 2 so verbunden werden, dass das gewindepanzernde Element als Verliersicherung der Schraube an dem Bauteil 4 dient. Dies kann dadurch erreicht werden, dass die Schraube 10 zunächst durch die Durchgangsbohrung 6 des Bauteils 2 hindurch gesteckt und anschließend das gewindepanzernde Element 18 bzw. 26 in der beschriebenen Weise auf der Schraube 10 fixiert wird. Eine andere Möglichkeit besteht darin, dass das gewindepanzernde Element 18 bzw. 26 auf der Schraube 10 in der beschriebenen Weise fixiert wird, ehe beide durch die Durchgangsbohrung 6 hindurch bewegt werden. Hierzu ist allerdings erforderlich, dass das gewindepanzernde Element auf der Schraube in ihrem Durchmesser etwas reduzierbar ist, damit die Schraube mit dem gewindepanzernden Element durch die Durchgangsbohrung 6 hindurch bewegt werden kann, worauf dann das gewindepanzernde Element 18 sich etwas aufweitet, so dass dann die Schraube von dem gewindepanzernden Element in der Durchgangsbohrung 6 des Bauteils 2 gehalten wird. In jedem Fall bietet dies die Möglichkeit, das Bauteil mit der Schraube bzw. mit mehreren Schrauben und den dazugehörigen gewindepanzernden Elementen gewissermaßen "vorzukonfektionieren", um dann das Anschrauben des Bauteils 2 am Bauteil 4 entsprechend zu vereinfachen.

Figur 9 zeigt eine Schraube 10a mit einem herkömmlichen gewindepanzernden Element 18A in Form eines bezüglich einer zentralen Achse X wendelförmig gewickelten Federdrahtes, welcher der Einfachheit halber nur auf der linken Seite der Schraube 10a dargestellt ist. Das gewindepanzernde Element 18A hat in Axialebenen (zum Beispiel Zeichenebene) einen diamantförmigen Querschnitt, so dass sich für die Innen- und Außenkontur des gewindepanzernden Elementes 18A ein zickzackförmiger Verlauf ergibt. Wie in Figur 9 zu sehen ist, liegen die "Berge" der Innen- und Außenkontur in gemeinsamen Radialebenen, und auch die Täler der Innen- und Außenkontur liegen in - um eine halbe Gewindesteigung dazu versetzten - gemeinsamen Radialebenen.

Figur 10 zeigt eine der Figur 9 entsprechende Anordnung einer Schraube 10B und eines gewindepanzernden Elements 18B in Form eines wendelförmig gewickelten Federdrahtes, dessen Querschnitt jedoch erfindungsgemäß abgewandelt ist.

Das gewindepanzernde Element 18B hat zwar ebenfalls eine zickzackförmig verlaufende Innen- und Außenkontur. Im Gegensatz zu dem herkömmlichen gewindepanzernden Element 18A der Figur 9 ist jedoch der Querschnitt des gewindepanzernden Elementes 18B so ausgebildet, dass die Berge 40i der Innenkontur und die Täler 40a der Außenkontur in gemeinsamen Radialebenen liegen und auch die Täler 42i der Innenkontur und die Berge 40a der Außenkontur in gemeinsamen Radialebenen liegen. Es ergibt sich somit ein dachgiebelartiger oder pfeilspitzenartiger Querschnitt des gewindepanzernden Elements 18B in Axialebenen.

Als Folge dieser Querschnittsform ist der Außendurchmesser D_{B} des gewindepanzernden Elements 18B deutlich kleiner als der Außendurchmesser D_{A} des gewindepanzernden Elementes 18a. Dies ermöglicht die Verwendung eines Aufnahmegewindes kleineren Durchmessers oder einer Schraube größeren Durchmessers.

Wenngleich die Innen- und Außenkontur des gewindepanzernden Elementes 18B einen zickzackförmigen Verlauf haben, ist jedoch auch ein anderer wellenförmiger Verlauf der Innen- und Außenkontur möglich. So könnten die Berge und Täler der wellenförmigen Innen- und Außenkontur abgerundet sein.

Bei dem in Figur 10 dargestellten Ausführungsbeispiel sind die einzelnen Windungen des gewindepanzernden Elementes 18B in Radialebenen geteilt, in denen die Täler 42i und Berge 40a der Innen- und Außenkontur liegen. Stattdessen könnte die Teilung jedoch um eine halbe Gewindesteigung versetzt vorgesehen werden, so dass dann die Teilungsebenen durch die Berge 40i der Innenkontur und die Täler 42a der Außenkontur verlaufen.

## Patentansprüche

1. Verfahren zum Montieren einer Schraube und eines gewindepanzemden Elementes in einem Aufnahmegewinde eines Bauteils, bei dem das gewindepanzemde Element (18; 26) zunächst durch Kraftschluss oder/und Stoffschluss auf der Schraube (10) fixiert wird und anschließend die Schraube (10) mit dem darauf fixierten gewindepanzernden Element (18; 26) in einem einzigen Arbeitsgang in das Aufnahmegewinde (8) des Bauteils (4) eingedreht wird.

2. Verfahren nach Anspruch 1, **dadurch gekennzeichnet, dass** die Fixierung des gewindepanzernden Elementes (18) auf der Schraube (10) so ausgebildet wird, dass das gewindepanzernde Element (18) während des gesamten Anziehvorgangs mitgedreht wird.

3. Verfahren nach Anspruch 1, **dadurch gekennzeichnet, dass** die Fixierung des gewindepanzernden Elementes (18) auf der Schraube (10) so ausgebildet wird, dass sich die Fixierung beim Anziehen der Schraube (10) und Aufbau der Vorspannkraft löst.

4. Verfahren einem der Ansprüche 1 bis 3, **dadurch gekennzeichnet, dass** der Stoffschluss zwischen dem gewindepanzernden Element (18; 26) und der Schraube (10) durch ein adhäsives Bindemittel, insbesondere Wachs oder Klebstoff erzielt wird.

5. Verfahren nach einem der Ansprüche 1 bis 3, **dadurch gekennzeichnet, dass** der Stoffschluss zwischen dem gewindepanzernden Element (18; 26) und der Schraube (10) durch Schweißen oder Löten erzielt wird.

6. Verfahren nach Ansprüche 1 bis 5, **dadurch gekennzeichnet, dass** das gewindepanzernde Element (18) ein wendelförmiger Draht ist.

7. Verfahren nach Anspruch 6, **dadurch gekennzeichnet, dass** der Kraftschluss **dadurch** erzielt wird, dass das gewindepazernde Element (18; 26) in einem Endbereich einen Innendurchmesser hat, der kleiner als der Außendurchmesser der Schraube (10) ist.

8. Verfahren nach einem der Ansprüche 1 bis 6, **dadurch gekennzeichnet, dass** das gewindepanzernde Element (26) eine Gewindebuchse mit einem Innengewinde (28) und einem Außengewinde (30) ist.

9. Verfahren nach Anspruch 8, **dadurch gekennzeichnet, dass** der Kraftschluss durch mindestens einen unvollständig ausgeformten Gewindegang (34) des Innengewindes (28) der Gewindebuchse (26) erzielt wird.

10. Verfahren nach Anspruch 8 oder 9, **dadurch gekennzeichnet, dass** die Gewindebuchse (26) mit einer Rückdrehsicherung versehen wird, die die Gewindebuchse (26) bei einer Demontage der Schraube (10) in dem Aufnahmegewinde (8) hält.

11. Verfahren nach einem der vorhergehenden Ansprüche, **dadurch gekennzeichnet, dass** das gewindepanzernde Element als gewindefurchendes Element ausgebildet ist.

12. Verfahren nach einem der vorhergehenden Ansprüche, bei dem die Schraube (10) und das gewindepanzernde Element (18) dazu benutzt werden, ein zweites Bauteil (2) an dem mit dem Aufnahmegewinde (8) versehenen ersten Bauteil (4) anzuschrauben, **dadurch gekennzeichnet, dass** die Schraube (10) durch eine Durchgangsbohrung (6) des zweiten Bauteils (2) hindurch gesteckt und das auf der Schraube (10) fixierte gewindepanzernde Element (18) als Verliersicherung der Schraube verwendet wird, so dass das zweite Bauteil mit Schraube und gewindepanzerndem Element vor einer Montage an dem ersten Bauteil als Einheit gehandhabt werden kann.

13. Anordnung aus einer Schraube (10) und einem durch Kraftschluss oder/und Stoffschluss darauf fixierten gewindepanzernden Element (18; 26) zum Durchführen des Verfahrens nach einem der vorhergehenden Ansprüche.

14. Gewindepanzerndes Element, insbesondere für ein Verfahren und eine Anordnung nach einem der vorhergehenden Ansprüche, in Form eines bezüglich einer zentralen Achse (X) wendelförmig gewickelten Federdrahtes (10B), dessen Außenform an ein Aufnahmegewinde und dessen Innenform an eine Schraube angepasst ist, wobei der wendelförmig gewickelte Federdraht (10B) in Axialebenen eine Innen- und Außenkontur hat, die jeweils eine gewellte Form mit Bergen (40i, 40a) und Tälern (42i, 42a) haben, wobei die Berge (40i) der Innenkontur und die Täler (42a) der Außenkontur jeweils in gemeinsamen Radialebenen liegen und die Täler (42i) der Innenkontur und die Berge (42a) der Außenkontur in gemeinsamen Radialebenen liegen.

15. Gewindepanzerndes Element nach Anspruch 14, **dadurch gekennzeichnet, dass** die Wellenform der Innen- und Außenkontur jeweils zickzackförmig ausgebildet ist.
